# EUROPÄISCHE PATENTSCHRIFT

(11) **EP 1 565 668 B1**
(45) Veröffentlichungstag und Bekanntmachung des Hinweises auf die Patenterteilung: **25.10.2006**
(21) Anmeldenummer: 03767561.8
(22) Anmeldetag: 17.11.2003
(51) Int. Cl.: F16D 65/56

(54) **SCHREIBENBREMSE MIT EINER NACHSTELLEINRICHTUNG, INSBESONDERE FÜR EIN NUTZFAHRZEUG**
DISC BRAKE WITH AN ADJUSTMENT DEVICE IN PARTICULAR FOR A COMMERCIAL VEHICLE
FREIN A DISQUE EQUIPE D'UN DISPOSITIF D'AJUSTAGE, EN PARTICULIER POUR UN VEHICULE UTILITAIRE

(30) Priorität: 18.11.2002 DE 10253642
(43) Veröffentlichungstag der Anmeldung: 24.08.2005
(73) Patentinhaber: KNORR-BREMSE SYSTEME FÜR NUTZFAHRZEUGE GMBH, 80809 München (DE)
(72) Erfinder: WIMMER, Josef, 94474 Vilshofen (DE); HIDRINGER, Michael, 94544 Hofkirchen (DE)
(74) Vertreter: Mattusch, Gundula
(86) Internationale Anmeldenummer: PCT/EP2003/012841
(87) Internationale Veröffentlichungsnummer: WO 2004/046579

(56) Entgegenhaltungen:
- DE-U- 9 422 342
- US-A- 4 064 973

## Beschreibung

Die vorliegende Erfindung betrifft eine Scheibenbremse, insbesondere für ein Nutzfahrzeug, gemäß dem Oberbegriff des Anspruchs 1.

Bei einer derartigen Scheibenbremse, wie sie beispielsweise aus der DE 94 22 342 U1 bekannt ist und die üblicherweise druckluftbetätigbar ist, ist die Zuspannvorrichtung mit einer Traverse gekoppelt, in der vorzugsweise zwei Stellspindeln gelagert sind, die jeweils ein Druckstück zur Aufnahme einer Bremsbacke aufweisen, die im Funktionsfall an eine Bremsscheibe angedrückt wird.

Die beiden Stellspindeln sind mit einem Außengewinde versehen und in eine jeweils zugeordnete Gewindebohrung der Traverse eingeschraubt.

Mittels einer Nachstelleinrichtung, die einer Stellspindel zugeordnet ist, und einem Mitnehmer der anderen Stellspindel wird durch Verdrehen der Stellspindeln in den Gewindebohrungen bei Verschleiß des Bremsbelages die Bremsbacke so weit zugestellt, daß ein Lüftspiel zwischen dem Bremsbelag und der Bremsscheibe im wesentlichen immer konstant bleibt.

Um zu verhindern, daß durch Erschütterungen während des Fahrbetriebs die Stellspindeln ihre Lage und somit den Abstand zwischen dem Bremsbelag und der Scheibenbremse, also das Lüftspiel, verändern, werden Sicherungselemente eingesetzt, die drehhemmend auf die Stellspindeln einwirken, so daß die genannte unbeabsichtigte Verstellung der Stellspindeln verhindert wird. Dabei liegen die Sicherungselemente reibend an der Stellspindel oder Teilen davon an.

Die Reibkraft ist so bemessen, daß bei einem durch die Nachstelleinrichtung aufzubringenden bestimmten Drehmoment die Drehung der Stellspindeln problemlos möglich ist, wobei dieses Drehmoment größer ist als ein solches, wie es sich aus den Erschütterungskräften im Fahrbetrieb ergeben kann.

Ein bekanntes Sicherungselement besteht aus einer Sekundärdichtung, die in dem dem Druckstück zugewandten Endbereich einer Stellspindel angeordnet ist und sichernd in die Stellspindel eingreift.

Unter anderem zur Funktion der Drehhemmung besteht die Sekundärdichtung bzw. das in die Stellspindel greifende Teil aus einem Kunststoff, der vor allem durch die beim Bremsen entstehende Reibwärme in Mitleidenschaft gezogen werden kann.

Dies trifft gleichermaßen auf eine ebenfalls aus Kunststoff bestehende Hülse zu, durch die eine Druckfeder vorspannbar ist, die sich andererseits an dem genannten Mitnehmer der zweiten Stellspindel abstützt, wodurch in diesem Bereich eine Drehhemmung erreicht wird,

Durch die konstruktionsbedingt unterschiedlichen Eingriffe im Sinne einer Drehhemmung beider Sicherungselemente ist überdies eine für beide gleiche Reibwerteinstellung praktisch nicht möglich, woraus sich ebenfalls Probleme sowohl beim Nachstellen wie auch bei der Sicherung der beiden Stellspindeln ergeben können.

Der vorliegenden Erfindung liegt daher die Aufgabe zugrunde, eine Scheibenbremse der gattungsgemäßen Art so weiter zu entwicleln, daß mit konstruktiv einfachen Mitteln die Zuverlässigkeit der Drehhemmung der Stellspindel verbessert und die Betriebssicherheit insgesamt erhöht wird.

Diese Aufgabe wird durch eine Scheibenbremse gelöst, die die Merkmale des Anspruchs 1 aufweist.

Innerhalb der Gewindebohrung bzw. des Eingriffsbereiches der Gewindespindel in das Gewinde der Gewindebohrung ist die Anordnung des Sicherungselementes in Form des Federringes im wesentlichen frei wählbar, so daß der Federring außerhalb eines Bereiches plaziert werden kann, der von der bei einer Bremsung entstehenden Wärme beaufschlagt wird. Materialschädigende Einflüsse können dadurch praktisch nicht mehr oder unwesentlich auftreten, wodurch sich eine gegenüber dem Stand der Technik erheblich verbesserte Sicherheit ergibt.

In vorteilhafter Weise besteht der Federring aus Metall, statt wie bisher aus Kunststoff. Aufgrund der Wärmeunempfindlichkeit des Metalls gegenüber dem bisher eingesetzten Kunststoff kann das Sicherungselement praktisch an jeder geeigneten Stelle des Funktionsbereiches vorgesehen sein, ohne daß sich Standzeitnachteile ergeben. Darüber hinaus ist der durch die drehhemmend wirkenden Reibkräfte bedingte Verschleiß des Sicherungselementes vernachlässigbar klein, so daß sich insgesamt eine wesentliche Verbesserung der Funktionssicherheit im Dauerbetrieb ergibt.

Da nun eine exakte Positionierung der Sicherungselemente möglich ist sowie eine genau gleiche Ausbildung insbesondere hinsichtlich Material und Form der Federringe, wird für beide Stellspindeln ein gleich großes Klemmoment wirksam.

Die Klemmwirkung selbst ist definierbar, und zwar durch die Art und Ausführung der Federringe sowie die definierte Einbaulage zwischen den zu verspannenden Bauteilen.

Die Drehhemmung der Gewindespindeln erfolgt gleichmäßig über den gesamten Umfang, ohne Angriff auf die Gewindeflanken, wodurch sich eine schonende Klemmung ergibt.

Die erforderliche Klemmkraft des Federringes kann durch Geometrieänderungen, aber auch durch entsprechende Materialauswahl erreicht werden und ist exakt vorbestimmbar.

Nach einem weiteren Gedanken der Erfindung ist vorgesehen, den Federring in seiner Kontur wellenförmig zu gestalten, so daß ein Teil der sich bildenden ,radial ausgerichteten Kuppen am Grund der Ringnut und der andere Teil am Gewinde des zugeordneten Bauteiles, also der Stellspindel oder der Gewindebohrung, anliegt.

Da der Federring über den ganzen Umfang reibend anliegt, ist eine Verdrehsicherung für den Federring nicht erforderlich.

Im übrigen ist die Herstellung des Federringes, dessen Montage sowie das Einbringen der Ringnut sehr einfach und kostengünstig möglich. Auch ein Auswechseln des Federringes gestaltet sich sehr einfach, so daß sich insgesamt eine Kostenoptimierung ergibt, die insbesondere deshalb als besonders vorteilhaft angesehen werden muß, als solche Scheibenbremsen in großen Stückzahlen Verwendung finden.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Scheibenbremse in einer teilweise geschnittenen Draufsicht,
- Figur 2: eine Einzelheit der Scheibenbremse in einer perspektivischen Ansicht,
- Figur 3: ein Sicherungselement nach der Erfindung ebenfalls in perspektivischer Darstellung.

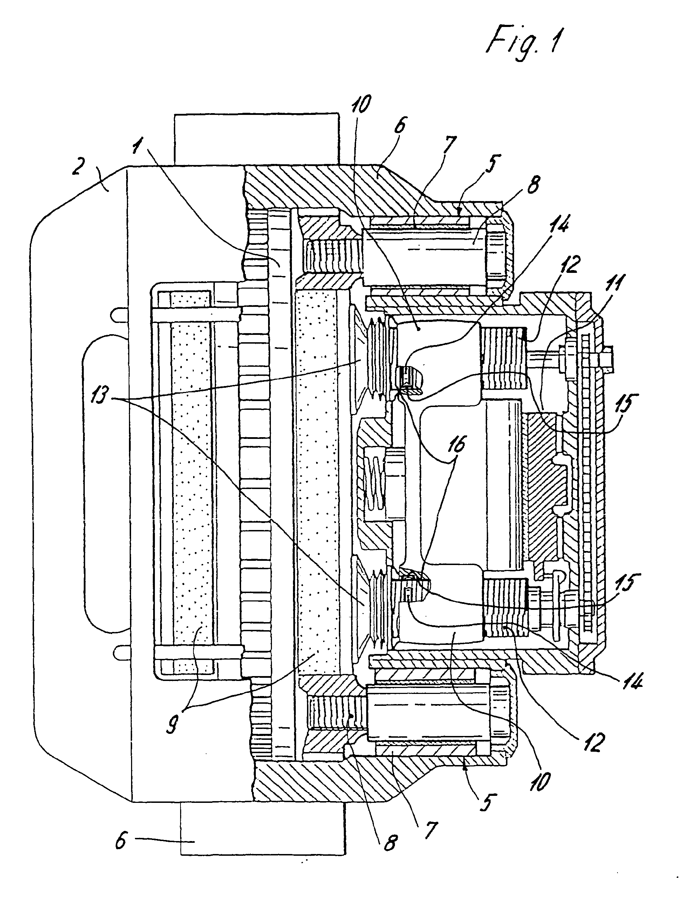

In der Figur 1 ist eine Scheibenbremse, insbesondere für ein Nutzfahrzeug, dargestellt, die in ihrem Grundaufbau einen Bremssattel 2 aufweist, der eine innenbelüftete Bremsscheibe 1 umfaßt, die an einer nicht dargestellten Achse des Nutzfahrzeuges befestigt ist.

Der Bremssattel 2 ist an einem Bremsträger 6 des Nutzfahrzeuges, bezogen auf die Bremsscheibe 1, axial verschiebbar festgelegt.

Hierzu sind Befestigungselemente 5 vorgesehen, die jeweils eine Gleitbuchse 7 sowie einen Führungsholm 8 aufweisen.

Die Gleitbuchsen 7 sind unverrückbar mit dem Bremssattel 2 verbunden, während die Führungsholme 8 in den Bremsträger 6 eingeschraubt sind, so daß die Gleitbuchsen 7 zusammen mit dem Bremssattel 2 auf den insoweit ortsfesten Führungsholmen 8 axial verschiebbar gelagert sind.

Wie weiter in der Figur 1 erkennbar ist, ist die Bremsscheibe 1 mit Bremsbelägen 9 zur Abbremsung in Wirkverbindung bringbar. Hierzu werden die Bremsbeläge 9 bei Bremsungen gegen die Bremsscheibe 1 gedrückt.

Zur Auslösung eines Bremsvorgangs ist an einer Seite des Bremssattels 2 eine Zuspannvorrichtung 11 angeordnet, von der im vorliegenden Ausführungsbeispiel nur ein Teil erkennbar ist und die an eine Traverse 10 angeschlossen ist.

In diese Traverse 10 sind zwei parallel und mit Abstand zueinander verlaufende, ein Außengewinde aufweisende Stellspindeln 12 eingeschraubt, die an einem Ende jeweils ein Druckstück 13 tragen, an denen einer der beiden Bremsbeläge 9 befestigt ist.

Mittels einer nicht dargestellten, mit mindestens einer der beiden Stellspindeln 12 gekoppelten Nachstelleinrichtung wird bei jeder Betätigung der Zuspannvorrichtung 11 erreicht, daß sich das infolge eines Belagverschleißes ändernde Lüftspiel konstant bleibt, d. h., die Stellspindeln 12 werden durch Drehung entsprechend axial verschoben.

Dabei kann die durch die Nachstelleinrichtung bewirkte Drehung einer Stellspindel 12 durch eine Synchronisationseinrichtung auf die andere Stellspindel übertragen werden, so daß diese um den gleichen Winkelbetrag gedreht wird mit der Folge, daß beide Stellspindeln 12 um exakt die gleiche axiale Strecke verfahren werden.

Um zu verhindern, daß sich während des Fahrbetriebs, beispielsweise durch Erschütterung, die Stellspindeln 12 unbeabsichtigt verdrehen und somit das Lüftspiel entsprechend in unerwünschter Weise verändert wird, sind Sicherungselemente jeweils in Form eines Federringes 14 vorgesehen, der drehhemmend entweder an dem Gewinde der Stellspindel 12 oder der Gewindebohrung 16 anliegt.

Beide Ausführungsmöglichkeiten sind in der Figur 1 erkennbar. Dabei ist zu sehen, daß die obere Stellspindel 12 eine umlaufende Ringnut 15 aufweist, in der der Federring 14 einliegt. Hingegen ist die Ringnut 15 im Bereich der unteren Stellspindel 12 durch einen Einstich in die Gewindebohrung 16 gebildet, in der der Federring 14 einliegt und reibend am Außengewinde der Stellspindel 12 anliegt.

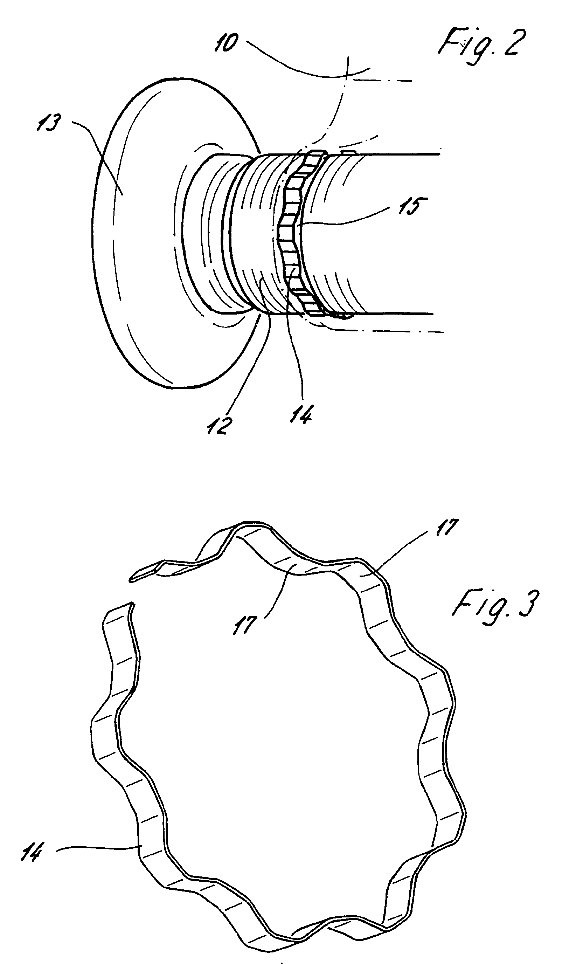

Eine vergrößerte Darstellung ist als schematischer Ausschnitt der Traverse 10 in der Figur 2 gezeigt, wobei diese Darstellung dem Bereich der unteren Stellspindel 12 nach Figur 1 entspricht.

Darin ist ebenso wie in der Figur 3 zu erkennen, daß das der Federring 14 eine wellenförmige Kontur aufweist, deren Kuppen 17 wechselweise am Grund der Ringnut 15 und am Außengewinde der Stellspindel 12 anliegen.

Wie weiter in der Figur 3 zu sehen ist, ist der Federring 14, der vorzugsweise aus einem Stahlblechstreifen geformt ist, geschlitzt, so daß die Federkräfte radial wirksam werden können.

Selbstverständlich sind neben der gezeigten Form des Federringes 14 auch andere Formen denkbar, insbesondere andere Konturen.

Die Ringnut 15, die vorzugsweise steigungsfrei verläuft, ist in ihrer Breite der Breite des Federringes 14 angepaßt, so daß dieser axial verschiebegesichert einliegt.

### Bezugszeichenliste

- 1: Bremssscheibe
- 2: Bremssattel 3 4
- 5: Befestigungselement
- 6: Bremsträger
- 7: Gleitbuchse
- 8: Führungsholm
- 9: Bremsbelag
- 10: Traverse
- 11: Zuspannvorrichtung
- 12: Stellspindel
- 13: Druckstück
- 14: Sicherungselement
- 15: Ringnut
- 16: Gewindebohrung
- 17: Hügel

## Patentansprüche

1. Scheibenbremse, insbesondere für ein Nutzfahrzeug, mit einem eine Bremsscheibe (1) umfassenden Bremssattel (2), der an einem Bremsträger (6), bezogen auf die Bremsscheibe (1), axial verschiebbar befestigt ist und an dessen einer Seite eine Zuspannvorrichtung (11) angeordnet ist, mit einem verschieblichen Element, insbesondere einer Traverse (10), das mindestens eine Gewindebohrung (16) aufweist, in die eine Stellspindel (12) eingeschraubt ist, die ein Druckstück (13) trägt, mit dem eine Bremsbacke (9) gegen die Bremsscheibe (1) preßbar ist, mit einer mit der Stellspindel (12) in Wirkverbindung stehenden Nachstelleinrichtung, mit der eine verschleißbedingte Änderung eines Lüftspiels zwischen der Bremsbacke (9) und der Bremsscheibe (1) im wesentlichen ausgleichbar ist, und mit einem bis zu einem bestimmten Drehmoment drehhemmend auf die Stellspindel (12) wirkenden Sicherungselement, **dadurch gekennzeichnet, daß** das Sicherungselement aus einem Federring (14) besteht, der in einer Ringnut (15) der Gewindebohrung (16) oder der Stellspindel (12) einliegt und sich federnd an dem gegenüber liegenden Gewinde abstützt.

2. Scheibenbremse nach Anspruch 1, **dadurch gekennzeichnet, daß** der Federring aus Metall besteht.

3. Scheibenbremse nach Anspruch 2, **dadurch gekennzeichnet, daß** der Federring (14) als Stahlfeder ausgebildet ist.

4. Scheibenbremse nach einem der Ansprüche 1 bis 3, **dadurch gekennzeichnet, daß** der Federring (14) eine wellenförmige Kontur aufweist.

5. Scheibenbremse nach einem der Ansprüche 1 bis 4, **dadurch gekennzeichnet, daß** der Federring (14) aus einem streifenförmigen Federmaterial, vorzugsweise Federblech, geformt ist.

6. Scheibenbremse nach Anspruch 1, **dadurch gekennzeichnet, daß** die Ringnut (15) steigungsfrei ausgebildet ist.

7. Scheibenbremse nach Anspruch 1, **dadurch gekennzeichnet, daß** die Ringnut (15) in ihrer Breite etwa der Breite des Federringes (14) entspricht.

8. Scheibenbremse nach einem der Ansprüche 1 bis 7, **dadurch gekennzeichnet, daß** der Federring (14) in seiner Geometrie, Dimensionierung und Materialauswahl abhängig von der auf die Stellspindel (12) aufzubringenden Klemmkraft bestimmt ist.

9. Scheibenbremse nach Anspruch 1, bei der zwei parallel und mit Abstand zueinander verlaufende Stellspindeln (12) vorgesehen sind, **dadurch gekennzeichnet, daß** jeder Stellspindel (12) ein Federring (14) zugeordnet ist.

10. Scheibenbremse nach Anspruch 9, **dadurch gekennzeichnet, daß** die Federringe (14) in Form, Material und Dimensionierung gleich sind.

## Claims

1. Disc brake, particularly for a commercial vehicle, comprising a brake calliper (2) including a brake disc (1), which is fastened for axial displacement, relative to said brake disc (1), on a brake support (6) and which presents one side on which a brake application device (11) is disposed, comprising a displaceable element, specifically a crossbar (10) having at least one threaded bore (16) into which an adjusting spindle (12) is screwed that carries a pressure element (13) by means of which a brake shoe (9) may be pressed against said brake disc (1), comprising an adjustment device in operative connection to said adjusting spindle (12), by means of which a wear-induced variation of a venting clearance between said brake shoe (9) and said brake disc (1) can be substantially compensated, and comprising a locking element acting upon said adjusting spindle (12) for blocking rotation up to a defined torque, **characterised in that** said locking element consists of a spring lock washer (14) placed into an annular groove (15) of said threaded bore (16) or said adjusting spindle (12) and resiliently bearing against the opposite threading.

2. Disc brake according to Claim 1, **characterised in that** said spring lock washer consists of metal.

3. Disc brake according to Claim 2, **characterised in that** said spring lock washer (14) is configured in the form of a steel spring.

4. Disc brake according to any of the Claims 1 to 3, **characterised in that** said spring lock washer (14) presents an undulated contour.

5. Disc brake according to any of the Claims 1 to 4, **characterised in that** said spring lock washer (14) is shaped of a strip-like spring material, preferably a spring sheet metal.

6. Disc brake according to Claim 1, **characterised in that** said annular groove (15) is configured without an inclination.

7. Disc brake according to Claim 1, **characterised in that** said annular groove (15) has a width corresponding approximately to the width of said spring lock washer (14).

8. Disc brake according to any of the Claims 1 to 7, **characterised in that** said spring lock washer (14) is determined in terms of its geometry, dimensioning and selected material as a function of the clamping force to be applied onto said adjusting spindle (12).

9. Disc brake according to Claim 1, wherein two adjusting spindles (12) are provided which extend in parallel and are spaced from each other, **characterised in that** one spring lock washer (14) is associated with each adjusting spindle (12).

10. Disc brake according to Claim 9, **characterised in that** said spring lock washers (14) equal each other in terms of shape, material and dimensioning.

## Revendications

1. Frein à disque, notamment pour un véhicule utilitaire, comprenant un disque de frein (1) surmonté par un étrier de frein (2) qui est fixé sur un support de frein (6) de manière axialement coulissante par rapport au disque de frein (1), et sur un côté duquel est agencé un dispositif de serrage (11) du frein, comprenant un élément coulissant, notamment une traverse (10), qui présente au moins un alésage fileté (16) dans lequel est vissée une broche de réglage (12) qui porte une pièce d'application de pression (13) par laquelle une mâchoire de frein (9) peut être poussée contre le disque de frein (1), comprenant également un mécanisme de rattrapage de jeu en liaison active avec la broche de réglage (12) et par lequel il est possible de compenser sensiblement une variation, due à l'usure, d'un jeu de desserrage entre la mâchoire de frein (9) et le disque de frein (1), et comprenant finalement un élément d'arrêt de sécurité agissant sur la broche de réglage (12) en la bloquant en rotation jusqu'à un certain couple de rotation déterminé, **caractérisé en ce que** l'élément d'arrêt de sécurité est constitué par un anneau élastique de ressort (14) qui repose dans une rainure annulaire (15) de l'alésage fileté (16) ou de la broche de réglage (12), et s'appuie de manière élastique sur le filetage respectivement opposé.

2. Frein à disque selon la revendication 1, **caractérisé en ce que** l'anneau élastique de ressort est en métal.

3. Frein à disque selon la revendication 2, **caractérisé en ce que** l'anneau élastique de ressort (14) est réalisé en que tant ressort d'acier.

4. Frein à disque selon l'une des revendications 1 à 3, **caractérisé en ce que** l'anneau élastique de ressort (14) présente un contour de forme ondulée.

5. Frein à disque selon l'une des revendications 1 à 4, **caractérisé en ce que** l'anneau élastique de ressort (14) est formé à partir d'un matériau en forme de bande, de préférence un feuillard d'acier à ressort.

6. Frein à disque selon la revendication 1, **caractérisé en ce que** la rainure annulaire (15) est réalisée exempte de pente.

7. Frein à disque selon la revendication 1, **caractérisé en ce que** la rainure annulaire (15) correspond, quant à sa largeur, environ à la largeur de l'anneau élastique de ressort (14).

8. Frein à disque selon l'une des revendications 1 à 7, **caractérisé en ce que** l'anneau élastique de ressort (14) est défini quant à sa géométrie, son dimensionnement et au choix du matériau, en fonction de la force de serrage à produire sur la broche de réglage (12).

9. Frein à disque selon la revendication 1, dans lequel sont prévues deux broches de réglage (12) s'étendant parallèlement l'une à l'autre et à distance l'une de l'autre, **caractérisé en ce qu'**à chaque broche de réglage (12) est associé un anneau élastique de ressort (14).

10. Frein à disque selon la revendication 9, **caractérisé en ce que** les anneaux élastiques de ressort (14) sont identiques quant à leur forme, leur matériau et leur dimensionnement.
